# EUROPÄISCHE PATENTSCHRIFT

(11) **EP 1 723 841 B1**
(45) Veröffentlichungstag und Bekanntmachung des Hinweises auf die Patenterteilung: **13.02.2008**
(21) Anmeldenummer: 05450192.9
(22) Anmeldetag: 24.11.2005
(51) Int. Cl.: A01B 35/22

(54) **Grubberzinken sowie Scharspitze hierfür**
Cultivator and plough point therefor
Cultivateur et pointe de soc associé

(30) Priorität: 17.05.2005 AT 8412005
(43) Veröffentlichungstag der Anmeldung: 22.11.2006
(73) Patentinhaber: Vogel & Noot Landmaschinen GmbH & Co KG, 8661 Wartberg (AT)
(72) Erfinder: Jambor, Helmut, Ing., 8661 Wartberg i.M. (AT)
(74) Vertreter: Atzwanger, Richard

(56) Entgegenhaltungen:
- EP-A- 1 504 639
- AU-B2- 585 175
- DE-A1- 10 014 155
- FR-A- 1 304 304
- US-A- 1 514 782

## Beschreibung

Die gegenständliche Erfindung betrifft einen Grubberzinken mit einem Grubberstiel, welcher mit einer Scharspitze ausgebildet ist, die an ihrer Rückseite mit mindestens einem zum Grubberstiel hin abragenden Vorsprung ausgebildet ist, welcher in eine am Grubberstiel vorgesehene, dem Vorsprung zugeordnete Ausnehmung einsetzbar ist und mit einer Einrichtung zur Verriegelung der mit dem Grubberstiel gekuppelten Scharspitze.

Bekannte als Bodenbearbeitungsgeräte dienende Bodengrubber bestehen aus einem an ein Schleppfahrzeug angelenkten Traggestell, welches mit mehreren quer zur Fahrtrichtung ausgerichteten Tragbalken für jeweils eine Mehrzahl von Grubberzinken ausgebildet ist. Jeder Grubberzinken besteht aus einem am Tragbalken befestigten und von diesem nach unten abragenden Grubberstiel, an welchem ein Leitblech, eine Scharspitze und gegebenenfalls eine Flügelschar befestigt sind. Um eine vollständige Bearbeitung des Bodens zu gewährleisten, sind die an hintereinander angeordneten Tragbalken befestigten Grubberzinken quer zur Bewegungsrichtung des Bodengrubbers gegeneinander versetzt. Ein Bodengrubber mit einer mittleren Größe ist z.B. mit zwei Tragbalken ausgebildet, an welchen 13 Grubberzinken befestigt sind. Bei demgegenüber größeren Bodengrubbern sind z. B. vier Tragbalken mit 26 Grubberzinken vorgesehen.

Da durch den Einsatz von Bodengrubbern die Scharspitzen der Grubberzinken einem sehr großen Verschleiß unterliegen, besteht das Erfordernis, die Scharspitzen an den Grubberzinken lösbar zu befestigen, um hierdurch die Scharspitzen auswechseln zu können. Bei der lösbaren Befestigung der einzelnen Scharspitzen muss jedoch berücksichtigt werden, dass nach einem Einsatz eines Bodengrubbers über nur wenige Tage hindurch sämtliche Scharspitzen ersetzt werden müssen, dass weiters eine große Anzahl von Scharspitzen betroffen ist, dass die Scharspitzen im Betrieb sehr starken Belastungen unterworfen sind, weswegen sie sehr gut befestigt sein müssen, und dass weiters die Grubberzinken durch das Erdreich verschmutzt sind, wodurch eine Entfernung der Scharspitzen, um sie durch neue Scharspitzen zu ersetzen, gleichfalls sehr erschwert wird.

Hierfür ist es bekannt, die Scharspitze am Grubberstiel mittels Schrauben zu befestigen. Eine derartige Befestigung ist jedoch sowohl bei der Lösung der Verschraubung als auch bei der erneuten Herstellung der Verschraubung sehr aufwendig, insbesondere unter Berücksichtigung des Sachverhaltes, dass der Grubberzinken durch dessen Verwendung stark verschmutzt ist.

Aus der DE 10319627 A1 ist ein Grubberzinken bekannt, bei welchem die Scharspitze am Grubberstiel mittels eines Steckbolzens, welchem ein Sicherungsbolzen zugeordnet ist, befestigt ist. Eine derartige Befestigung der Scharspitze ist insoferne den Erfordernissen entsprechend, als die Scharspitze ohne Werkzeug vom Grubberstiel lösbar ist. Eine derartige Befestigung ist jedoch deshalb nicht den Erfordernissen entsprechend, da sie mehrere zusätzliche Montageteile erfordert, welche einerseits manipuliert werden müssen und welche andererseits in Verlust geraten können, wodurch die Auswechslung der Scharspitze erschwert wird.

Aus der EP 1504639 A1 ist weiters ein Grubberzinken bekannt, bei welchem zwar nicht die Scharspitze jedoch die Flügelschar mittels eines Schnellwechselsystems am Grubberstiel befestigt ist.

Eine derartige Befestigung der Flügelschar ist insoferne den Erfordernissen entsprechend, als die Flügelschar ohne Werkzeug vom Grubberstiel lösbar ist. Eine derartige Befestigung ist jedoch deshalb nicht den Erfordernissen entsprechend, da sie mehrere zusätzliche Montageteile, wie ein Sicherungselement und einen Keil erfordert, welche einerseits manipuliert werden müssen und welche andererseits in Verlust geraten können, wodurch die Auswechslung der Flügelschar erschwert wird.

Aus der DE 10013621 A1 ist zudem ein Grubberzinken bekannt, bei welchem die Scharspitze und die Flügelschar am Grubberstiel mittels einander zugeordneten Konusflächen befestigbar sind. Zur Befestigung der Scharspitze bzw. der Flügelschar müssen diese auf die am Grubberstiel befindliche Konusfläche aufgesetzt und mittels eines Schlagwerkzeuges mit dieser durch Reibungsschluss gekuppelt werden.

Da eine derartige Konuskupplung durch die Bewegungsrichtung des Bodengrubbers noch weiter verriegelt wird, bedingt es jedoch einen besonderen Aufwand, diese Kupplung wieder zu lösen, um die Scharspitze bzw. die Flügelschar auswechseln zu können. Weiters ist die Herstellung der am Grubberstiel und an der Scharspitze vorgesehenen, einander zugeordneten Konusflächen sehr aufwendig und daher teuer. Zudem muss auch diese Kupplung durch zusätzliche Bauteile gesichert werden.

Analoge Sachverhalte gelten für den aus der US 5979568 A bekannten Bodengrubber, bei welchem die mit einer Flügelschar ausgebildete Scharspitze mit dem Grubberstiel gleichfalls durch Reibungsschluss gekuppelt ist.

Aus der US-A-1514782 ist weiters ein Grubberzinken bekannt, bei welchem die Scharspitze mit einem Vorsprung ausgebildet ist, welcher in eine am Grubberstiel vorgesehene, dem Vorsprung zugeordnete Ausnehmung einsetzbar ist. Die Verriegelung der Scharspitze am Grubberstiel erfolgt dabei mittels eines in einander zugeordnete Bohrungen einsetzbaren Bolzens.

Dieser Grubberzinken ist somit gleichfalls nicht den Erfordernissen entsprechend, da für die Montage bzw. Demontage der Scharspitze ein zusätzlicher Bauteil betätigt werden muss.

Aus der FR-A-1514782 ist weiters ein Grubberzinken bekannt, bei welchem die Scharspitze mit einem Vorsprung ausgebildet ist, welcher in eine am Grubberstiel vorgesehene, dem Vorsprung zugeordnete Ausnehmung einsetzbar ist. Die Verriegelung der Scharspitze am Grubberstiel erfolgt dabei mittels eines in einander zugeordnete Bohrungen einsetzbaren Bolzens.

Dieser Grubberzinken ist somit gleichfalls nicht den Erfordernissen entsprechend, da für die Montage bzw. Demontage der Scharspitze ein zusätzlicher Bauteil betätigt werden muss.

Aus der FR-A-1304304 ist weiters ein Grubberzinken bekannt, bei welchem an der Scharspitze ein verdrehbares Rastelement gelagert ist. Dieser bekannte Grubberzinken ist deshalb sehr nachteilig, da mit einer neuen Scharspitze jeweils auch ein neues Rastelement in den Grubberstiel eingesetzt wird, wodurch ein sehr hoher Kostenaufwand bedingt wird.

Der gegenständlichen Erfindung liegt somit die Aufgabe zugrunde, einen Grubberzinken zu schaffen, bei welchem einerseits die Scharspitze am Grubberstiel den Erfordernissen entsprechend starr befestigbar ist, wobei jedoch hierfür keine zusätzlichen Montageteile erforderlich sind, welche in Verlust geraten können, bei welchen andererseits die Kupplung in einfacher Weise und ohne Werkzeug lösbar ist, sodass die Scharspitze ohne besonderen Aufwand vom Grubberstiel gelöst und durch eine neue Scharspitze ersetzt werden kann und bei welchem jeweils nur die Scharspitze ohne weitere Bauteile durch eine neue Scharspitze ersetzbar ist.

Diese Aufgaben werden erfindungsgemäß dadurch gelöst, dass der Grubberstiel mit einem an diesem starr befestigten Leitblech ausgebildet ist, dass die Scharspitze an ihrer Rückseite mit zwei in Arbeitsrichtung voneinander im Abstand befindlichen, zum Grubberstiel hin abragenden Vorsprüngen ausgebildet ist, welche in am Grubberstiel vorgesehene, den Vorsprüngen zugeordnete Ausnehmungen einsetzbar sind, dass die Einrichtung zur Verriegelung der mit dem Grubberstiel gekuppelten Scharspitze durch ein am Grubberstiel angeordnetes Rastelement gebildet ist, welches mit einer Ausnehmung ausgebildet ist, in welche gleichfalls einer der beiden von der Rückseite der Scharspitze abragenden Vorsprünge einsetzbar ist und dass am Grubberstiel ein Stellhebel vorgesehen ist, durch welchen das Rastelement in seiner die Scharspitze mit dem Grubberstiel kuppelnden Stellung fixierbar ist.

Vorzugsweise ist der Stellhebel am Grubberstiel entgegen der Wirkung einer Stellfeder verschwenkbar gelagert. Weiters ist vorzugsweise das Rastelement als Flügelschar ausgebildet.

Nach einer weiteren bevorzugten Ausführungsform untergreift der in der Arbeitslage der Scharspitze von deren Rückseite abragende obere Vorsprung, welcher vorzugsweise hakenförmig ausgebildet ist, die untere Berandung des Leitbleches. Dabei kann weiters das Leitblech an seiner unteren Berandung mit einer Ausnehmung ausgebildet sein, in welche der in der Arbeitslage der Scharspitze von deren Rückseite abragende, obere Vorsprung einsetzbar ist. Insbesondere ist die Scharspitze an ihrem in der Arbeitslage oberen Ende mit einer zum Grubberstiel hin abragenden Kröpfung ausgebildet, welche in die am Grubberstiel vorgesehene Ausnehmung einsetzbar ist.

Weiters ist vorzugsweise zwischen dem Leitblech bzw. der an dieses anschließenden Scharspitze und dem Grubberstiel ein Tragblech vorgesehen, welches im Bereich des unteren Ende des Leitbleches mit einer Ausnehmung ausgebildet ist, in welche der in der Arbeitslage der Scharspitze von deren Rückseite abragende, obere Vorsprung einsetzbar ist. Zudem kann das Tragblech an seinem unteren Ende mit mindestens einer weiteren Ausnehmung ausgebildet sein, in welche der von der Rückseite der Scharspitze abragende untere Vorsprung, welcher vorzugsweise gleichfalls hakenförmig ausgebildet ist, eingreift. Hierbei kann die am unteren Ende des Tragbleches vorgesehene Ausnehmung von der unteren Berandung des Tragbleches ausgehen.

Vorzugsweise sind die sich quer zur Arbeitsrichtung erstreckenden Breiten der von der Rückseite der Scharspitze abragenden Vorsprünge angenähert gleich den Breiten der am Grubberstiel vorgesehenen Ausnehmungen, wodurch die Scharspitze in ihrer mit dem Grubberstiel verrasteten Lage auch gegenüber quer zur Arbeitsrichtung auftretenden Belastungen gesichert ist.

Eine Scharspitze zur Verwendung bei einem erfindungsgemäßen Grubberzinken ist vorzugsweise an ihrem der Spitze gegenüber liegenden Ende mit mindestens einer zur Rückseite hin gerichteten Kröpfung und in ihrem mittleren Bereich mit mindestens einem von der Rückseite abragenden hakenförmigen Vorsprung ausgebildet, wobei die Kröpfung und der hakenförmige Vorsprung zu deren lösbaren Befestigung am Grubberstiel dienen.

Der Gegenstand der Erfindung ist nachstehend anhand eines in der Zeichnung dargestellten Ausführungsbeispieles näher erläutert. Es zeigen:
- FIG.1: einen erfindungsgemäßen Grubberzinken, in axonometrischer Darstellung;
- FIG.2: die einzelnen Teile des Grubberzinkens der FIG.1, in auseinandergezogener axonometrischer Darstellung; und
- FIG.3, 3a, 3b, 3c: den Grubberzinken gemäß FIG.1, im Schnitt nach der Ebene III-III der FIG.1 mit der in drei unterschiedlichen Stellungen befindlichen Scharspitze.

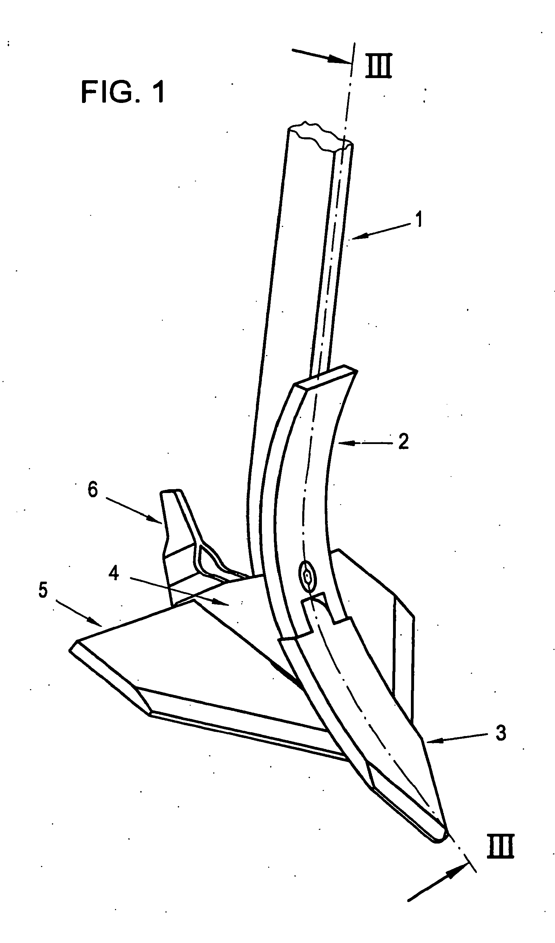

Wie dies aus FIG.1 ersichtlich ist, weist ein erfindungsgemäßer Grubberzinken einen Grubberstiel 1 auf, dessen oberes Ende am Traggestell des Bodengrubbers starr befestigt ist. Am unteren Ende des Grubberstiels 1 sind an diesem ein Leitblech 2 und eine an dieses anschließende Scharspitze 3 befestigt. Weiters ist am Grubberstiel 1 ein U-förmiger Tragbügel 4 befestigt, an welchem eine nach beiden Seiten des Grubberstiels 1 abragende Flügelschar 5 befestigt ist. Zur Befestigung der Scharspitze 3 und der Flügelschar 5 am Grubberstiel 1 dient ein am Tragbügel 4 verschwenkbar gelagerter Stellhebel 6.

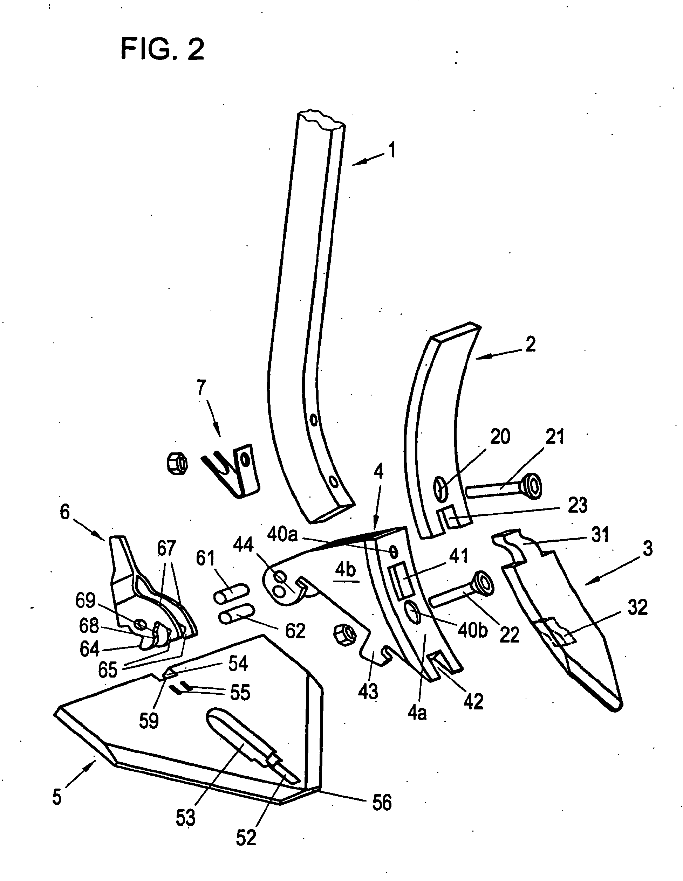

Aus der FIG.2 sind einerseits der Grubberstiel 1, das Leitblech 2, die Scharspitze 3, der U-förmige Tragbügel 4, die Flügelschar 5, der Stellhebel 6 sowie weiters eine Stellfeder 7 und andererseits deren Bestandteile, welche miteinander zusammenwirken, in auseinandergezogener, axonometrischer Darstellung ersichtlich.

Das Leitblech 2 ist am Grubberstiel 1 mittels einer ersten Befestigungschraube 21, welche eine Bohrung 20 des Leitbleches 2 durchsetzt, starr befestigt. Der Tragbügel 4 besteht aus einem mittleren, nachstehend als Tragblech 4a bezeichneten Steg und aus zwei von diesem seitlich abragenden Schenkeln 4b, wobei das Tragblech 4a mit zwei Bohrungen 40a und 40b für die erste Befestigungsschraube 21 und für eine zweite Befestigungsschraube 22 sowie mit zwei zumindest angenähert rechteckigen Ausnehmungen 41 und 42 ausgebildet ist.

Der Tragbügel 4 ist am Grubberstiel 1 mittels der ersten Befestigungsschraube 21, welche die erste Bohrung 40a des Tragbügels 4 durchsetzt, und mittels der zweiten Befestigungsschraube 22, welche die zweite Bohrung 40b des Tragbügels 4 durchsetzt, starr befestigt.

Die Scharspitze 3 ist an ihrem oberen Ende mit einer zum Grubberstiel 1 hin abragenden Kröpfung 31 und im mittleren Bereich ihrer Rückseite mit einem zum Grubberstiel 1 hin abragenden hakenförmigen Vorsprung 32 ausgebildet, welche den im Tragblech 4a des Tragbügels 4 vorgesehenen zwei Ausnehmungen 41 und 42 zugeordnet sind. Der Kröpfung 31 ist weiters eine am unteren Rand des Leitbleches 2 befindliche, zumindest angenähert rechteckige Ausnehmung 23 zugeordnet. Die beiden Schenkel 4b des Tragbügels 4 sind an dem der Scharspitze 3 zugewandten Ende mit zwei vorderen Haken 43 und an dem dem Schwenkhebel 6 zugewandten Ende mit zwei hinteren Haken 44 ausgebildet, welchen in der Flügelschar 5 eine vordere schlitzartige Ausnehmung 53 und an deren hinterer Berandung eine nach hinten offene Ausnehmung 54 zugeordnet sind. Die in der Flügelschar 5 befindliche vordere Ausnehmung 53 ist durch eine gegenüber dieser etwas schmälere, schlitzartige Ausnehmung 52 fortgesetzt, welche dem von der Rückseite der Scharspitze 3 abragenden hakenförmigen Vorsprung 32 zugeordnet ist und welche durch einen vorderen Steg 56 verschlossen ist.

Der Stellhebel 6 ist an einem zwischen den beiden Schenkeln 4b des Tragbügels 4 befindlichen ersten Bolzen 61 verschwenkbar gelagert. Zwischen dem Grubberstiel 1 und dem Stellhebel 6 befindet sich weiters die V-förmige Stellfeder 7, welche an zwei Führungsflächen 67 des Stellhebels 6 zur Anlage kommt. Zudem ist zwischen den beiden Schenkeln 4b ein zweiter Bolzen 62 vorgesehen, welchem am Stellhebel 6 befindliche Anschlagflächen 64 zugeordnet sind, die unter der Wirkung der Stellfeder 7 an den zweiten Bolzen 62 zur Anlage kommen. Zudem ist der Stellhebel 6 mit Rasthaken 65 ausgebildet, welchen in der Flügelschar 5 befindliche Rastöffnungen 55 zugeordnet sind. Schließlich ist der Stellhebel 6 zwischen den Anschlagflächen 64 und den Rasthaken 65 mit Stellflächen 68 ausgebildet, welche in ihrem mittleren Bereich mit einer Ausnehmung 69 ausgebildet sind und welche der Berandung 59 der in der Flügelschar 5 befindlichen hinteren Ausnehmung 54 zugeordnet sind und mit dieser zusammenwirken.

Durch diese Ausbildung des Grubberzinkens wird es ermöglicht, sowohl die Scharspitze 3 als auch die Flügelschar 5 am Gruberstiel 1 einerseits den Erfordernissen des Betriebes entsprechend starr zu befestigen und andererseits die Befestigung der Scharspitze 3 und der Flügelschar 5 in einfacher Weise zu lösen, um diese beiden Bauteile rasch durch neue Bauteile ersetzen zu können.

Dabei sind das Leitblech 2 und der Tragbügel 4 mit dem Grubberstiel 1 durch die Schrauben 21 und 22 starr verbunden und sind die Scharspitze 3 und die Flügelschar 5 mit dem Grubberstiel 1 durch Verrastung gekuppelt, wobei sie vom Grubberstiel 1 durch Verschwenkung des Stellhebels 6 in einfacher Weise lösbar sind. Da sich der Stellhebel 6 in Arbeitsrichtung des Grubberzinkens hinter dem Leitblech 2 und der Scharspitze 3 befindet, ist er gegenüber durch den Betrieb auftretende Einwirkungen, insbesondere gegenüber Beschädigungen, geschützt.

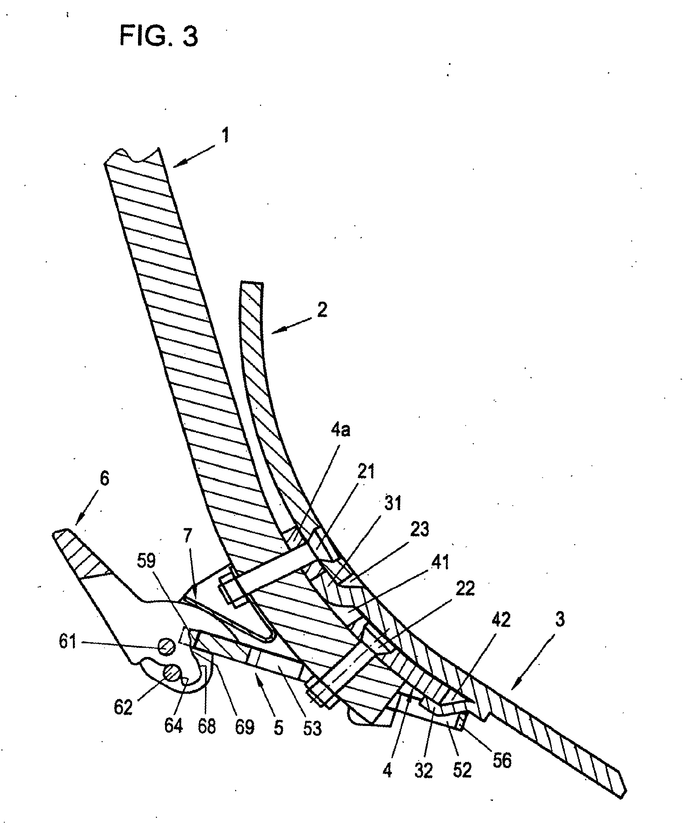

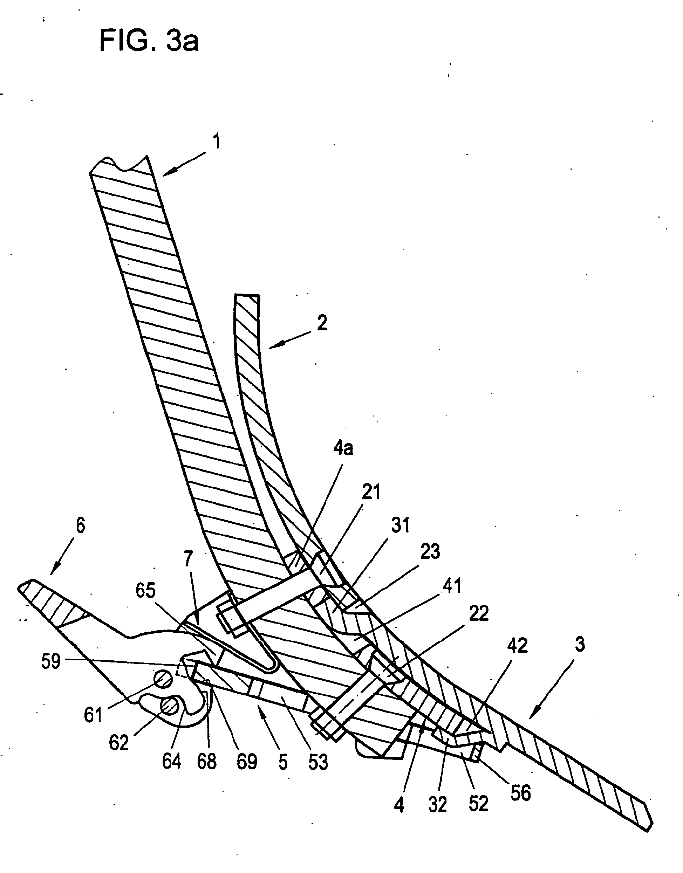

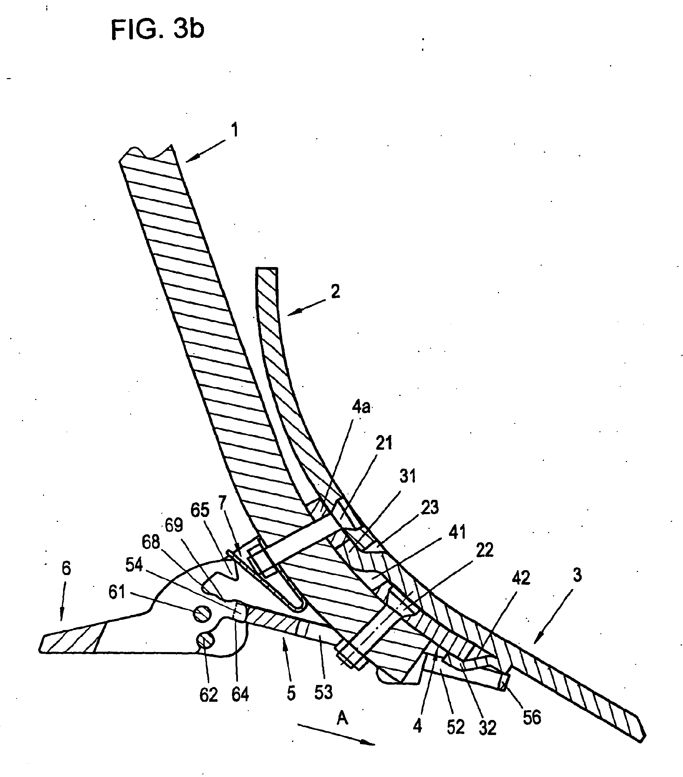

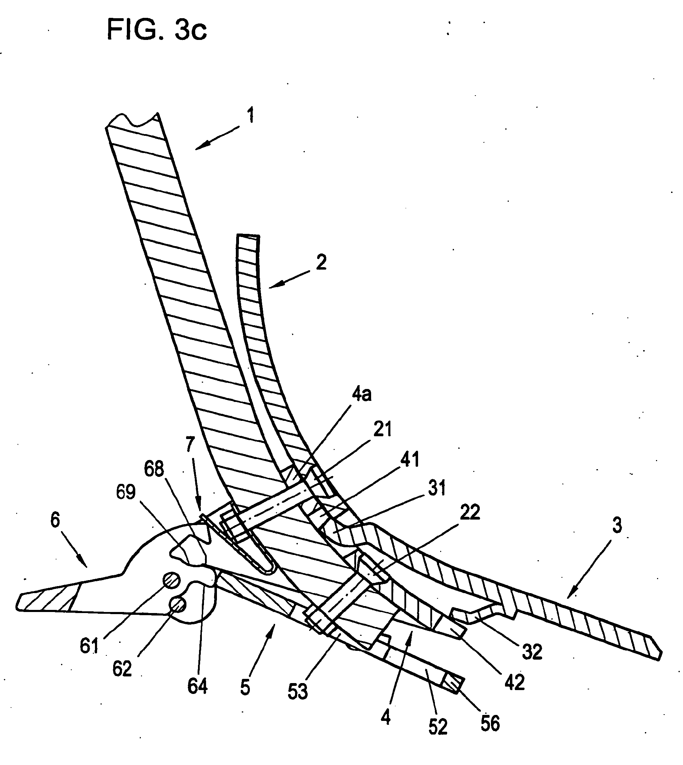

In FIG.3 ist dieser Grubberzinken in der Arbeitslage dargestellt. Dabei ist die Kröpfung 31 der Scharspitze 3 in die obere Ausnehmung 41 des Tragbügels 4 und in die Ausnehmung 23 des Leitbleches 2 eingesetzt, wobei deren freies Ende den unteren Rand des Leitbleches 2 untergreift. Weiters ragt der hakenförmige Vorsprung 32 der Scharspitze 3 in die Ausnehmung 42 des Tragbügels 4 und in den Schlitz 52 der Flügelschar 5 ein, wobei dessen freies Ende den inneren Rand der Ausnehmung 42 untergreift.

In dieser Stellung der Scharspitze 3 ist diese durch die Flügelschar 5, welche mittels des Stellhebels 6 gegenüber dem Grubberstiel 1 verschiebbar ist, verrastet. Der Stellhebel 6 ist durch die Stellfeder 7 in dieser Endstellung gehalten, wobei dessen Anschläge 64 am Bolzen 62 zur Anlage kommen. Die Kupplung des Stellhebels 6 mit der Flügelschar 3 ist dadurch bewirkt, dass die Rasthaken 65 des Stellhebels 6 in die in der Flügelschar 5 befindlichen Rastausnehmungen 55 eingreifen.

Die Flügelschar 5 befindet sich in ihrer hinteren Endstellung, in welcher deren hinterer Rand in die durch die Haken 44 des Tragbügels 4 gebildeten Ausnehmungen einragt, wobei die Haken 44 den Rand der Ausnehmung 54 untergreifen. Weiters befinden sich die vorderen Haken 43 des Tragbügels 4 innerhalb der vorderen Ausnehmung 53 der Flügelschar 5, wobei sie dessen vorderen Rand untergreifen. Zudem befindet sich der hakenförmige Vorsprung 32 in der schlitzartigen Ausnehmung 52 und innerhalb des vorderen Steges 56 der Flügelschar 5.

Die Scharspitze 3 ist dadurch in der Arbeitslage gehalten, dass sich deren Kröpfung 31 in den Ausnehmungen 23 und 41 befindet und das Leitblech 2 untergreift sowie dass sich der hakenförmige Vorsprung 32 in den Ausnehmungen 42 und 52 befindet, wobei das freie Ende den inneren Rand der Ausnehmung 42 untergreift. Da die in die Ausnehmungen 23,41 einragende Kröpfung 31 sowie der in die Ausnehmungen 42 und 52 einragende hakenförmige Vorsprung 32 aneinander mit engen Toleranzen angepasst sind, sind die Scharspitze 3 und die Flügelschar 5 auch gegenüber quer zur Arbeitsrichtung auftretenden Belastungen gesichert.

Wie dies in den FIG.3a bis 3c dargestellt ist, erfolgt die Lösung der Befestigung der Scharspitze 3 und der Flügelschar 5 vom Grubberstiel 1 dadurch, dass der Stellhebel 6 entgegen der Wirkung der Stellfeder 7 im Gegenuhrzeigersinn verschwenkt wird. In einem ersten Schwenkbereich befindet sich die untere Kante der Berandung 59 der Flügelschar 5 in den in den Stellflächen 68 des Stellhebels 6 vorgesehenen Ausnehmungen 69. Durch eine Verschwenkung des Stellhebels 6 werden die Rasthaken 65 aus den Rastöffnungen 55 der Flügelschar 5 heraus verschwenkt. Es wird hiezu auf die FIG.3a verwiesen. Bei einer weiteren Verschwenkung des Stellhebels 6 gleiten die Führungsflächen 68 des Stellhebels 6 längs der unteren Kante der Berandung 59 der Flügelschar 5, wodurch diese in Richtung des Pfeiles A der FIG.3b verschoben wird. Hierdurch wird die Flügelschar 5 aus den Haken 43 und 44 hinausgeschoben. Es wird hiezu auf FIG.3b verwiesen.

Hierdurch kommt die Flügelschar 5 vom Tragbügel 4 frei und fällt von diesem ab. Ebenso wird auch der von der Rückseite der Scharspitze 3 abragende hakenförmige Vorsprung 32 von der Flügelschar 5 freigegeben, wodurch die Scharspitze 3 im Gegenuhrzeigersinn verschwenkt und die Kröpfung 31 aus den Ausnehmungen 23 und 41 herausgezogen werden kann. Es wird hiezu auf FIG.3c verwiesen.

Sobald der Stellhebel 6 nicht mehr betätigt wird, wird er unter der Wirkung der Stellfeder 7 im Uhrzeigersinn zurück verschwenkt. Hierauf kann eine neue Scharspitze 3 eingesetzt werden. Weiters kann eine neue Flügelschar 5 eingesetzt werden, welche entgegen der Richtung des Pfeiles A so lange verschoben wird, bis die Rasthaken 65 unter Wirkung der Stellfeder 7 in die Rastöffnungen 55 einrasten. Hierbei befindet sich die Flügelschar 5 wieder in ihrer Arbeitslage, in welcher sie mittels der Hakenpaare 43 und 44 am Tragbügel 4 befestigt ist. Da dabei weiters der hakenförmige Vorsprung 32 der Scharspitze 3 in die Ausnehmungen 42 und 52 einragt, ist sie mittels der Flügelschar 5 in ihrer Lage gehalten.

Hierdurch ist eine Befestigung der Scharspitze 3 und der Flügelschar 5 geschaffen, welche einerseits den Anforderungen des Betriebes entsprechend stabil ist und welche andererseits dadurch in einfacher Weise lösbar ist, dass der Stellhebel 6 entgegen der Wirkung der Stellfeder 7 verschwenkt wird. Zudem sind für die Verrastung der Scharspitze 3 in ihrer Arbeitslage keine zusätzlichen Montageteile erforderlich und kann die Kupplung der Scharspitze 3 mit dem Grubberstiel 1 und deren Lösung vom Grubberstiel 1 ohne zusätzliche Werkzeuge vorgenommen werden.

Durch die erfindungsgemäße Kupplung der Scharspitze mit dem Grubberstiel werden somit die dem bekannten Stand der Technik anhaftenden Nachteile vermieden.

## Patentansprüche

1. Grubberzinken mit einem Grubberstiel (1), welcher mit einer Scharspitze (3) ausgebildet ist, die an ihrer Rückseite mit mindestens einem zum Grubberstiel (1) hin abragenden Vorsprung [31] ausgebildet ist, welcher in eine am Grubberstiel (1) vorgesehene, dem Vorsprung (31) zugeordnete Ausnehmung (41) einsetzbar ist und mit einer Einrichtung zur Verriegelung der mit dem Grubberstiel (1) gekuppelten Scharspitze (3), **dadurch gekennzeichnet, dass** der Grubberstiel (1) mit einem an diesem starr befestigten Leitblech (2) ausgebildet ist, dass die Scharspitze (3) an ihrer Rückseite mit zwei in Arbeitsrichtung voneinander im Abstand befindlichen, zum Grubberstiel (1) hin abragenden Vorsprüngen (31, 32) ausgebildet ist, welche in am Grubberstiel (1) vorgesehene, den Vorsprüngen (31, 32) zugeordnete Ausnehmungen (41, 42) einsetzbar sind, dass die Einrichtung zur Verriegelung der mit dem Grubberstiel (1) gekuppelten Scharspitze (3) durch ein am Grubberstiel (1) angeordnetes Rastelement (5) gebildet ist, welches mit einer Ausnehmung [53] ausgebildet ist, in welche gleichfalls einer der beiden von der Rückseite der Scharspitze abragenden Vorsprünge (32) einsetzbar ist und dass am Grubberstiel (1) ein Stellhebel (6) vorgesehen ist, durch welchen das Rastelement (5) in seiner die Scharspitze (3) mit dem Grubberstiel (1) kuppelnden Stellung fixierbar ist.

2. Grubberzinken nach Patentanspruch 1, **dadurch gekennzeichnet, dass** der Stellhebel (6) am Grubberstiel (1) entgegen der Wirkung einer Stellfeder (7) verschwenkbar gelagert ist.

3. Grubberzinken nach einem der Patentansprüche 1 und 2, **dadurch gekennzeichnet, dass** das Rastelement als Flügelschar (5) ausgebildet ist.

4. Grubberzinken nach einem der Patentansprüche 1 bis 3, **dadurch gekennzeichnet, dass** der in der Arbeitslage der Scharspitze (3) von deren Rückseite abragende, obere Vorsprung (31), welcher vorzugsweise hakenförmig ist, die untere Berandung des Leitbleches (2) untergreift.

5. Grubberzinken nach einem der Patentansprüche 1 bis 4, **dadurch gekennzeichnet, dass** das Leitblech (2) an seiner unteren Berandung mit einer Ausnehmung (23) ausgebildet ist, in welche der in der Arbeitslage der Scharspitze (3) von deren Rückseite abragende obere Vorsprung (31) einsetzbar ist.

6. Grubberzinken nach einem der Patentansprüche 1 bis 5, **dadurch gekennzeichnet, dass** die Scharspitze (3) an ihrem in der Arbeitslage oberen Ende mit einer zum Grubberstiel (1) hin abragenden Kröpfung (31) ausgebildet ist, welche in die am Grubberstiel (1) vorgesehene Ausnehmung (41) einsetzbar ist.

7. Grubberzinken nach einem der Patentansprüche 1 bis 6, **dadurch gekennzeichnet, dass** zwischen dem Leitblech (2) bzw. der an dieses anschließenden Scharspitze (3) und dem Grubberstiel (1) ein Tragblech (4a) vorgesehen ist, welches im Bereich des unteren Endes des Leitbleches (2) mit einer Ausnehmung (41) ausgebildet ist, in welche der in der Arbeitslage der Scharspitze (3) von deren Rückseite abragende obere Vorsprung (31) einsetzbar ist.

8. Grubberzinken nach Patentanspruch 7, **dadurch gekennzeichnet, dass** das Tragblech (4a) an seinem unteren Ende mit mindestens einer weiteren Ausnehmung (42) ausgebildet ist, in welche der von der Rückseite der Scharspitze (3) abragende untere Vorsprung (32), welcher vorzugsweise hakenförmig ist, eingreift.

9. Grubberzinken nach Patentanspruch 8, **dadurch gekennzeichnet, dass** die am unteren Ende des Tragbleches (4a) vorgesehene Ausnehmung (42) von der unteren Berandung des Tragbleches (4a) ausgeht.

10. Grubberzinken nach einem der Patentansprüche 1 bis 9, **dadurch gekennzeichnet, dass** die sich quer zur Arbeitsrichtung erstreckenden Breiten der von der Rückseite der Scharspitze (3) abragenden, vorzugsweise hakenförmige Vorsprünge (31, 32) angenähert gleich den Breiten der am Grubberstiel vorgesehenen Ausnehmungen (23,41; 42,52) sind, wodurch die Scharspitze (3) in ihrer mit dem Grubberstiel (1) verrasteten Lage gegenüber quer zur Arbeitsrichtung auftretenden Belastungen gesichert ist.

11. Scharspitze (3) zur Verwendung bei einem Grubberzinken nach einem der Patentansprüche 1 bis 10, **dadurch gekennzeichnet, dass** sie an ihrem der Spitze gegenüber liegenden Ende mit mindestens einer zur Rückseite hin gerichteten Kröpfung (31) ausgebildet ist und dass sie in ihrem mittleren Bereich mit mindestens einem von der Rückseite abragenden hakenartigen Vorsprung (32) ausgebildet ist, wobei die Kröpfung (31) und der hakenartige Vorsprung (32) zu deren lösbaren Befestigung am Grubberstiel (1) dienen.

## Claims

1. A cultivator tine having a cultivator shank (1), which is provided with a share tip (3), which is provided at its rear with at least one projection (31) projecting towards the cultivator shank (1), which projection (31) may be inserted into an opening (41) provided on the cultivator shank (1) and associated with the projection (31), and having a means for locking the share tip (3) coupled to the cultivator shank (1), **characterised in that** the cultivator shank (1) is provided with a guide plate (2) attached rigidly to said shank (1), **in that** the share tip (3) is provided at its rear with two projections (31, 32) spaced from one another in the working direction and projecting towards the cultivator shank (1), which projections may be inserted into openings (41, 42) provided on the cultivator shank (1) and associated with the projections (31, 32), **in that** the means for locking the share tip (3) coupled to the cultivator shank (1) is formed by a latching element (5) arranged on the cultivator shank (1), which latching element (5) is provided with an opening (53), into which one of the two projections (32) projecting from the rear of the share tip is likewise insertable, and **in that** an adjusting lever (6) is provided on the cultivator shank (1), by means of which lever (6) the latching element (5) may be fixed in its position coupling the share tip (3) to the cultivator shank (1).

2. A cultivator tine according to claim 1, **characterised in that** the adjusting lever (6) is mounted on the cultivator shank (1) so as to be swivellable against the action of an adjusting spring (7).

3. A cultivator tine according to one of claims 1 and 2, **characterised in that** the latching element takes the form of a winged share (5).

4. A cultivator tine according to one of claims 1 to 3, **characterised in that** the upper projection (31) projecting from the rear of the share tip (3) when the latter is in the working position, said projection (31) preferably being hook-shaped, grips under the lower edge of the guide plate (2).

5. A cultivator tine according to one of claims 1 to 4, **characterised in that** the guide plate (2) is provided at its lower edge with an opening (23), into which the upper projection (31) may be inserted which projects from the rear of the share tip (3) when the latter is in the working position.

6. A cultivator tine according to one of claims 1 to 5, **characterised in that** the share tip (3) is provided at its upper end in the working position with a kink (31) projecting towards the cultivator shank (1), which kink (31) may be inserted into the opening (41) provided on the cultivator shank (1).

7. A cultivator tine according to one of claims 1 to 6, **characterised in that** a support plate (4a) is provided between the guide plate (2) or the share tip (3) adjoining it and the cultivator shank (1), which support plate (4a) is provided in the area of the lower end of the guide plate (2) with an opening (41) into which may be inserted the upper projection (31) projecting from the rear of the share tip (3) when the latter is in the working position.

8. A cultivator tine according to claim 7, **characterised in that** the support plate (4a) is provided at its lower end with at least one further opening (42), in which there engages the lower projection (32) projecting from the rear of the share tip (3), which projection (32) is preferably hook-shaped.

9. A cultivator tine according to claim 8, **characterised in that** the opening (42) provided at the lower end of the support plate (4a) starts from the lower edge of the support plate (4a).

10. A cultivator tine according to one of claims 1 to 9, **characterised in that** the widths extending transversely of the working direction of the preferably hook-shaped projections (31, 32) projecting from the rear of the share tip (3) are approximately equal to the widths of the openings (23, 41; 42, 52) provided on the cultivator shank, whereby the share tip (3) is secured in its position latched to the cultivator shank (1) relative to loads arising transversely of the working direction.

11. A share tip (3) for use in the case of a cultivator tine according to one of claims 1 to 10, **characterised in that** it is provided at its opposite end from the tip with at least one kink (31) directed towards the rear and **in that** it is provided in its central area with at least one hook-type projection (32) projecting from the rear, the kink (31) and the hook-type projection (32) serving in the detachable attachment thereof to the cultivator shank (1).

## Revendications

1. Dent de cultivateur comportant une tige de cultivateur (1) avec une pointe de soc (3) qui est pourvue sur sa face arrière d'au moins une saillie (31) qui dépasse en direction de la tige (1) et qui est apte à être insérée dans un creux (41) prévu sur la tige (1) et associé à la saillie (31), et comportant un dispositif pour le verrouillage de la pointe de soc (3) accouplée à la tige de cultivateur (1), **caractérisée en ce que** la tige de cultivateur (1) comporte, fixée rigidement sur elle, un déflecteur (2), **en ce que** la pointe de soc (3) est pourvue sur sa face arrière de deux saillies (31, 32) qui sont espacées l'une de l'autre dans le sens de travail, qui dépassent en direction de la tige (1) et qui sont aptes à être insérées dans des creux (41, 42) prévus dans la tige (1) et associés aux saillies (31, 32), **en ce que** le dispositif pour verrouiller la pointe de soc (3) accouplée à la tige (1) est formé par un élément de verrouillage (5) qui est disposé sur la tige (1) et qui est pourvu d'un creux (53) dans lequel l'une des deux saillies (32) dépassant de la face arrière de la pointe de soc est apte à être insérée, là aussi, et **en ce qu'**il est prévu sur la tige de cultivateur (1) un levier de commande (6) grâce auquel l'élément de verrouillage (5) est apte à être fixé dans sa position accouplant la pointe de soc (3) à la tige de cultivateur (1).

2. Dent de cultivateur selon la revendication 1, **caractérisée en ce que** le levier de commande (6) est monté sur la tige de cultivateur (1) de manière à pouvoir pivoter à l'encontre de l'action d'un ressort de commande (7).

3. Dent de cultivateur selon la revendication 1 ou 2, **caractérisée en ce que** l'élément de verrouillage est conçu comme un soc à ailes (5).

4. Dent de cultivateur selon l'une des revendications 1 à 3, **caractérisée en ce que** la saillie supérieure (31), de préférence en forme de crochet, qui dépasse de la face arrière de la pointe de soc (3), dans la position de travail de celle-ci, est accrochée sous le bord inférieur du déflecteur (2).

5. Dent de cultivateur selon l'une des revendications 1 à 4, **caractérisée en ce que** le déflecteur (2) est pourvu, sur son bord inférieur, d'un creux (23) dans lequel la saillie supérieure (31) qui dépasse de la face arrière de la pointe de soc (3), dans la position de travail de celle-ci, est apte à être insérée.

6. Dent de cultivateur selon l'une des revendications 1 à 5, **caractérisée en ce que** la pointe de soc (3) est pourvue, à son extrémité supérieure en position de travail, d'une partie coudée (31) qui dépasse en direction de la tige de cultivateur (1) et qui est apte à être insérée dans le creux (41) prévu sur la tige (1).

7. Dent de cultivateur selon l'une des revendications 1 à 6, **caractérisée en ce qu'**il est prévu, entre le déflecteur (2) et la pointe de soc (3) qui fait suite à celui-ci, et la tige de cultivateur (1), une tôle de support (4a) qui est pourvue, dans la zone de l'extrémité inférieure du déflecteur (2), d'un creux (41) dans lequel peut être insérée la saillie supérieure (31) qui dépasse de la face arrière de la pointe de soc (3) dans la position de travail de celle-ci.

8. Dent de cultivateur selon la revendication 7, **caractérisée en ce que** la tôle de support (4a) est pourvue, à son extrémité inférieure, d'au moins un autre creux (42) dans lequel s'accroche la saillie inférieure (32), de préférence en forme de crochet, qui dépasse de la face arrière de la pointe de soc (3).

9. Dent de cultivateur selon la revendication 8, **caractérisée en ce que** le creux (42) prévu sur l'extrémité inférieure de la tôle de support (4a) part du bord inférieur de celle-ci.

10. Dent de cultivateur selon l'une des revendications 1 à 9, **caractérisée en ce que** les largeurs, transversalement par rapport au sens de travail, des saillies (31, 32) de préférence en forme de crochet qui dépassent de la face arrière de la pointe de soc (3) sont approximativement égales aux largeurs des creux (23, 41 ; 42, 52) prévus sur la tige de cultivateur (1), moyennant quoi la pointe de soc (3), dans sa position verrouillée sur la tige (1), est protégée contre des contraintes apparaissant transversalement par rapport au sens de travail.

11. Pointe de soc (3) à utiliser avec une dent de cultivateur selon l'une des revendications 1 à 10, **caractérisée en ce qu'**elle est pourvue, sur son extrémité opposée à la pointe, d'au moins une partie coudée (31) dirigée vers sa face arrière, et **en ce qu'**elle est pourvue, dans sa zone centrale, d'au moins une saillie en forme de crochet (32) qui dépasse de la face arrière, la partie coudée (31) et la saillie en forme de crochet (32) servant à la fixation amovible de ladite pointe de soc (3) sur la tige de cultivateur (1).
